# EUROPEAN PATENT SPECIFICATION

(11) **EP 3 816 125 B1**
(45) Date of publication and mention of the grant of the patent: **05.07.2023**
(21) Application number: 20460041.5
(22) Date of filing: 29.10.2020
(51) Int. Cl.: C03C 17/34, C03C 27/06, C09K 11/88, H01L 31/055, B32B 17/06, C09K 11/02, C09K 11/56

(54) **METHOD OF OBTAINING A SELECTIVE FIREPROOF LAYER MODIFIED WITH SEMICONDUCTOR NANOPARTICLES AND FILLING THE CHAMBER OR CHAMBERS OF A GLASS UNIT WITH THIS ACTIVE LAYER AS WELL AS A GLASS UNIT CONTAINING THIS OR THOSE LAYERS**
VERFAHREN ZUR HERSTELLUNG EINER MIT HALBLEITERNANOPARTIKELN MODIFIZIERTEN, SELEKTIVEN BRANDSCHUTZSCHICHT UND ZUR FÜLLUNG DER KAMMER ODER KAMMERN EINER GLASEINHEIT MIT DIESER AKTIVEN SCHICHT SOWIE EINE GLASEINHEIT MIT DIESER ODER DIESEN SCHICHTEN
PROCÉDÉ D'OBTENTION D'UNE COUCHE IGNIFUGE SÉLECTIVE MODIFIÉE AVEC DES NANOPARTICULES À SEMI-CONDUCTEUR ET DE REMPLISSAGE D'UNE OU DE CHAMBRES D'UNE UNITÉ DE VERRE AVEC CETTE COUCHE ACTIVE AINSI QU'UNE UNITÉ DE VERRE CONTENANT CETTE OU CES COUCHES

(30) Priority: 29.10.2019 PL 43163819
(43) Date of publication of application: 05.05.2021
(73) Proprietor: ML SYSTEM Spólka Akcyjna, 36-062 Zaczernie (PL)
(72) Inventor: KWASNICKI, Pawel, 35-233 Rzeszów (PL); MARSZALEK, Ludmila, 36-030 Blazowa (PL)
(74) Representative: Warzybok, Tadeusz

(56) References cited:
- WO-A1-01/70495
- WO-A1-94/04355
- WO-A1-2004/082933
- WO-A1-2014/086561
- WO-A1-2016/060643
- US-A1- 2013 115 441

## Description

The subject of the invention is a method of obtaining a selective, active layer - a fireproof matrix modified with semiconductor nanoparticles and filling the chamber or chambers of a glass unit with this active layer and a glass unit containing this or these layers, which is the equipment of windows in residential buildings and public buildings.

A commonly used multi-functional glass unit consists of at least two panes forming an inter-pane chamber or chambers filled with air or other gas. A single-chamber glass unit usually has an outer tempered pane and an inner pane with an emissive coating, which are separated by a steel distance frame or a warm TGI distance frame, and the chamber formed between them is filled with gas.

Semiconductor nanoparticles (monocrystals) (quantum dots - QDS) are structures with a size comparable to the Bohr radius of an exciton (electron - hole pair). Due to the high luminescence efficiency and the ability to adjust the band gap, solid materials prepared of QDS have been used as light sources and in photovoltaics.

In turn, low-dimensional structures of semiconductors called quantum dots absorb electromagnetic radiation waves in a wide range, from UV to IR, as a result of which they emit waves of a strictly defined length depending on the energy of the band gap in the range from 450 to 850 nm, which, in turn, are transferred to the edge of the system where the photovoltaic effect and electricity generation take place.

Quantum dots are semiconductors with a zero-dimensional structure in which the movement of electrons is limited in all three directions, and the energy of the electron is quantized, and these dots are a special type of nanoparticles whose characteristics are closely related to their size. The smaller the diameter of the quantum dot, the greater the band gap between the top of the valence band and the bottom of the conduction band. For example, the smaller the diameter of particles, the emission spectrum shifts towards shorter wavelengths, and this phenomenon has been called the quantum size effect. Thus, nanoparticles are a class of materials whose properties are defined by the characteristics of particles smaller than 100 nm. Changing the shape and size of nanoparticles affects such properties as: emission wavelength, magnetic properties and charge transport in semiconductor systems. The key element is the use of nanoparticles in the design of materials whose properties can be controlled by the nanoparticle size scale, which can be used as components of devices and functional systems using new technologies, preferably also in solar cells, BIPV installations - in which quantum dots as sensitizers are adsorbed on the photoelectrode. The most frequently synthesized quantum dots are the II - IV semiconductor structures made of CdSe, CdTe and CdSe/CdS, and due to their small size of 1 to 100 nm, they have discrete energy levels similar to those found in atoms.

From US Patent, 6346431 a device based on quantum dots, operating in a near infrared range and a method for its production are also know. This device is a diode and has a layered structure using quantum dots called GaAs/LnAs self-growing dots. They are produced in such a way that a first indium arsenide wetting layer is applied to a gallium arsenide substrate, and then a gallium arsenide layer heavily doped with indium InₓG₍₁₋ₓ₎As, which, due to the network mismatch, spontaneously transforms into small nanometre-sized lumps called GaAs/LnAs quantum self-growing dots. Thereafter, a buffer layer is applied to which a barrier layer of undoped aluminium-gallium arsenide in the form of Al_{(y)}Ga_{(1-y)}As is applied. On both sides of the layer structure, the electrodes are applied, each of which is made on the substrate of a doped contact layer, wherein electrodes are connected to a power source. The emission of infrared radiation (near infrared) occurs when the electrodes are connected to a power source (in a photoluminescent diode system) or a gallium arsenide layer constituting the substrate is irradiated. In order to produce coherent photons, excitons, i.e. electron-hole pairs in self-growing quantum dots, are used there which bind simultaneously both electrons and holes, and in the case of an exciton laser, light is generated as a result of a recombination of a radiant electron-hole pair in a quantum dot. The photon energy is then of the order of a semiconductor band gap, which corresponds to the red or near infrared radiation for GaAs/LnAs dots.

On the other hand, from the Polish patent specification No. PL 203033, a quantum dot device for the generation of coherent far infrared radiation and a method of producing inversion of occupations in a matrix of quantum dots applied with an electric field in a narrow quantum well in a semiconductor heterostructure are known. The essence of the quantum dot device according to this invention is that a layered structure is embedded between the metal electrodes, the lower electrode of which is made of a continuous conductive layer, while the upper electrode is made of a perforated metal layer. The layered structure with the electrodes is a capacitor in which a bottom barrier and an upper barrier are applied between the metal electrodes on the substrate, wherein there is a quantum well between the barriers. The shape and size of the holes in the upper electrode determine the electron-binding potential in a small nanometre-sized region of the quantum well that constitute quantum dots. Preferably the substrate is made of Al0.3Ga0.7As gallium arsenide doped with Cr chromium, the lower and upper barriers are made of an undoped gallium-aluminium arsenide layer in the form of Al0.3Ga0.7As, and the quantum well is made of a GaAs gallium arsenide layer. The device according to this invention uses completely different quantum dots, namely quantum dots produced by means of an electric field, i.e. by electrostatic focusing electrons in a thin quantum well of the Ga(Al)As type. The thickness of the well is of the order of 2 nm, which provides a quasi-two-dimensional movement of electrons in the well. A multilayer structure of a quantum well is produced in a standard way, i.e. by molecular beam epitaxy (MBI) methods, Al_{0.3}Ga_{0.7}As barrier layers are placed between which a thin GaAs layer is located. As a result of the shifting of the band edges in both materials, the GaAs layer forms a quantum well, into which electrons flow from the additional Al_{0.3}Ga_{0.7}As layer doped with Cr chromium to the extent depending on the needs of an electron density in the well. A thin continuous metal electrode is placed under the well structure, and a perforated electrode made by ion or electron lithography from a thin metal layer is placed above the well. The electrodes, when connected to an electric voltage, generate an appropriately space-modulated electric field distribution associated with the perforation of the upper electrode, leading to a side binding potential for electrons in the quantum well, which is also a repulsive potential for holes. Contrary to the self-growing dots, empty dots inflicted by an electric field bind only electrons, not excitons.

From the patent specification No. US2017/0069802A1, a light emitting device having a light emitting surface and an optical element containing quantum dots enclosed in a construction element containing a single crystalline sapphire is also known, the optical element is coupled to the light emitting element being a semiconductor by a heat conductive element. In one embodiment of this device, the semiconductor light emitting element is located outside a lower part of a housing and an optical element containing quantum dots is attached to an upper part of a housing between its side walls, leaving a gap between the two components. The gap can be partially or completely filled with a thermally conductive gel, optically transparent in the spectral range of radiation emitted by the dye (450 nm), or with air.

On the other hand, from the patent description US2016/341397A1 a method of coating quantum objects with one or more insulating layers is known, after which the applied quantum dots are dispensed in a sheet which is installed in a LED lighting or in an electronic display device. In a general embodiment, a semiconductor structure comprises a nanocrystalline core composed of a first semiconductor material also including a nanocrystalline coating composed of a second, different type of semiconductor material partially surrounding the nanocrystalline core. Then, in this method, an insulator layer and a nanocrystalline core are insulated with a nanocrystalline coating, and after the first insulator layer is formed, applied quantum dots can be covered with further insulator layers. In addition, the surface with quantum dots may be treated with acid or alkali between the formation of each insulator layer, if desired.

Known from the Polish patent description No. P.423437, a light glass plate emitting electromagnetic waves made of ordinary or thermally strengthened to tempered glass with a thickness ranging from 2 mm to 12 mm, float type, or a glass pane made of thin or ultra-thin float glass with a thickness of from 0.5 mm to 1.8 mm, including chemically tempered, with sequentially applied at least one waveguide layer along with an active waveguide layer of the converter placed in the middle surface of this waveguide layer, with an external waveguide layer of the converter applied to it. Preferably, the waveguide layers of the electromagnetic wave converter are made of titanium dioxide TiO₂ and/or zinc oxide ZnO and/or silver Ag and/or hafnium dioxide HfO₂. It is also preferably that the thickness of the waveguide layers is from 15 nm to 200 nm, and the external waveguide layer is from 10 nm to 250 nm, and that the active waveguide layers of the electromagnetic wave converter are made of nanoscale quantum dots (QD) with the core shell architecture, converting waves in the UV and/or VIS and/or IR range and producing the effect of emission of electromagnetic wave in the visible wavelength range (VIS).

As mentioned above, glass units are composed of several elements that affect the parameters of the finished glass unit, and consequently the entire window. Thermally toughened float glass panes commonly used in glass units are 4 mm thick, and for larger surfaces they are replaced with 6 mm or 8 mm thicker glass, including laminated or thermally tempered. Standard windows use double-glazed units with ordinary float glass on the outside and thermofloat glass on the inside, which prevents heat from escaping from the living room. Thermal insulating glass units used especially in the production of windows made of two or three glass panes separated by distance frames filled with a desiccant, with gas-filled inter-pane spaces are known. Thermal insulating glass units are usually mounted in windows in order to reduce heat loss from the room to the outside. The commonly known thermal insulating anti-burglary single-chamber glass pane consists of external glass panes of the "float" type with a thickness of 4 mm connected together using a polymer EVA film or resin, and an internal glass pane with a thermal insulating coating 4 mm thick, between which there is an aluminium distance frame with a thickness of 16 mm, with a water vapour absorbent, sealed with these panes with silicone, and the inter-pane space is filled with a mixture of krypton and air. A thermal insulating, single-chamber safe glass pane consisting of an outer pane, 4 mm thick, made of float glass, and two inner panes connected together using film or resin, 3 mm-thick float glass panes, of which the central glass pane on an inner surface has a thermal insulating coating, between which there is an aluminium distance frame with a thickness of 16 mm, with a water vapour absorbent, sealed with these panes with silicone, and the inter-pane space is filled with a mixture of argon and air is also known. A standard single-chamber glass unit is also known, the glass unit consist of two external glass panes of the "float" type, 4 mm or 8 mm thick, connected together with a polymer EVA film or resin and a 4 mm external "float" glass pane with a thermal insulating coating, between which there is a distance frame with a thickness of 16 mm, also with a water vapour absorbent, sealed with these panes with silicone is also known.

The Polish patent application no. P.395532 discloses a thermal insulating glass unit assembly, consisting of four glass panes, including two "float" panes separated by distance frames filled with a desiccant in the form of a molecular sieve, with inter-pane spaces filled with dry air or a inert gas characterized by the fact that at least two outer glass panes between which there are two float panes have a low-emission coating placed on the inner surfaces of these glass panes, ensuring increased thermal insulation, and between these four panes and distance frames there is a primary and a secondary seal.

WO0170495 A1 and WO2004082933 A1 disclose fire-resistant glass laminates comprising an interlayer made of a solution comprising sodium and/or potassium silicate and glycerol.

There are no technical solutions known from the prior art concerning both single-chamber or several-chamber glass units and devices absorbing electromagnetic radiation with the use of a fireproof gel (liquid composite) containing quantum dots (QDS) as semiconductor structures in its chemical composition.

Therefore, the aim of the present invention is to develop a method of obtaining a universal selective fireproof layer, also called a matrix, modified with semiconductor nanoparticles enriched with quantum dots distributed evenly throughout the gel volume of this matrix and with the same concentration in mg/cm³. The further aim of the invention is to select the appropriate type of glass panes and their coatings for the production of glass units, the chamber or chambers of which filled with this gel layer-matrix will ensure high fire resistance in accordance with the "EI" class and will enable the conversion of UV, VIS and IR waves, and at the same time obtaining the visible wavelengths (VIS) range of electromagnetic radiation.

The present invention relates to methods for obtaining a selective fireproof layer modified with semiconductor nanoparticles as defined in claims 1 and 3 and to the corresponding products as defined in claims 2 and 4, respectively.

The method of obtaining a selective fireproof layer modified with semiconductor nanoparticles according to the invention consists in the fact that it is carried out in five successive technological steps, consisting in the following:
- in the first step, dispersion of quantum dots (QDS) is performed with the chemical composition CdSe/CdS with spheroidal architecture and the ability to absorb electromagnetic waves in the UV - VIS - IR range and convert them into wavelengths of 600 nm in glycerol, obtaining the concentration of these quantum dots on levels from 20 mg/l to 50 mg/l, then
- in the second step, a matrix for quantum dots (QDS) is prepared by homogenizing a mixture in a reactor equipped with a rotary stirrer by successively introducing into it:
   - 32.2 - 32.4% by weight of an aqueous sodium silicate solution, and
   - 32.2 - 32.4% by weight of an aqueous potassium silicate solution, which are stirred at a temperature of 20-23°C and for 10-20 minutes, obtaining the homogeneous mixture, and then
   - in the third step, the following components are added dropwise to this homogeneous mixture with the continuous rotation of the stirrer of this reactor at the temperature of 35°C:
   - 0.75% by weight of sorbitol
   - 0.85% by weight of xylitol, and
   - 2% - 3.00% by weight of glycerol dispersion of quantum dots and the whole is stirred in this reactor for 35-45 minutes, also obtaining a homogeneous mixture, and then
- in the fourth step, 30.60% - 32.00% by weight of an aqueous colloidal silica solution are introduced into this reactor with this homogeneous mixture of all components and the whole is stirred at a temperature of 40-50°C and for 40-60 minutes, and the resulting milky white, homogeneous mixture is cooled down to the temperature of 20 - 23°C to obtain the liquid selective fireproof matrix modified with semiconductor nanoparticles, and then with the thus obtained matrix
- in the fifth step, the chamber or chambers formed between each two glass panes of the glass unit are filled through the opening previously made in distance frames formed between each two glass panes of the glass unit using a dispenser, and then glass units filled with this fireproof matrix are subjected to a temperature of 60°C - 70°C for 6 - 8 hours, as a result of which the required transparency and fire resistance of the entire system, of each of these glass units, is obtained, and then the system is cooled.

The glass unit according to the invention is characterized by the fact that the chamber or chambers of this glass unit is (are) filled with an active fireproof layer modified with semiconductor nanoparticles containing in its recipe composition:
- 32.2 - 32.4% by weight of an aqueous sodium silicate solution
- 32.2 - 32.4% by weight of an aqueous potassium silicate solution
- 0.75% by weight of sorbitol
- 0.85% by weight of xylitol
- 2 % - 3.00% by weight of glycerine dispersion of quantum dots
- 30.60% - 32.00% by weight of colloidal silica.

In turn, the method of obtaining a selective fireproof layer modified with semiconductor nanoparticles according to the invention consists in the fact that it is carried out in four successive technological steps, consisting in the following:
- in the first step, dispersion of quantum dots (QDS) is performed with the chemical composition CdSe/CdS with spheroidal architecture and the ability to absorb electromagnetic waves in the UV - VIS - IR range and convert them into wavelengths of 600 nm in glycerol, obtaining the concentration of these quantum dots on levels from 20 mg/l to 40 mg/l, then
- in the second step, a matrix for quantum dots (QDS) is prepared by homogenizing a mixture in a reactor equipped with a rotary stirrer, successively introducing into it:
   - 57.8% by weight of potassium silicate and 7.8% by weight of dispersion of quantum dots (QDS) in glycerol is added dropwise,
      which are stirred together at the temperature of 40 °C and for 35 minutes to obtain the homogeneous mixture, and then
- in the third step, 34.40% by weight of an aqueous solution of colloidal silica are introduced into this reactor with the obtained homogeneous mixture, and the whole is stirred at a temperature of 40-50°C and for 40-60 minutes, resulting in a milky white homogeneous mixture, which is cooled down to a temperature of 20 - 23°C obtaining a liquid selective fireproof matrix modified with semiconductor nanoparticles, and then with the matrix obtained in this way
- in the fourth step, the chamber or chambers formed between each two glass panes of the glass unit are filled through opening made in distance frames placed between each two glass panes of the glass unit, and then the glass units filled with this fireproof matrix are subjected to a temperature of 60°C - 70°C for 6 - 8 hours, as a result of which the required transparency and fire resistance of the entire system, of each of these glass units, is obtained, and then they are cooled.

The glass unit according to the invention is characterized in that the chamber or chambers of the glass unit is (are) filled with a selective fireproof layer modified with semiconductor nanoparticles containing in its recipe composition:
- 57.8% by weight of an aqueous potassium silicate solution
- 7.8% of dispersion of quantum dots in glycerol at a concentration of 40 mg/l
- 34.4% by weight of colloidal silica.

Semiconductor nanocrystals used for the conversion of the electromagnetic wave show high chemical and temperature stability, while maintaining their optoelectronic properties. Due to the strong covalent bond present, II-VI, III-V compounds do not degrade and decompose even at high temperatures of 400°C.

The functionalisation of the surface ensures an even dispersion in the matrix without agglomeration and sedimentation.

The silica-based components used to build the matrix for quantum dots (QDS) - aqueous solutions of sodium and potassium silicates and an aqueous solution of colloidal silica - ensure the fire resistance of the system by creating a hard opaque layer that provides temporary protection against the penetration of fire, smoke and gases into the adjacent fire-free rooms.

During combustion of units with inorganic silica filling according to the present invention, no toxic substances harmful to living organisms are released, unlike fireproof units with organic matrices based on e.g. acrylic compounds, whose decomposition products are highly toxic.

Materials of gel-filled glass assemblies of the present invention are environmentally friendly and easy to dispose of, while fireproof assemblies containing organic fillers based on acrylic compounds require a complicated and costly disposal process.

The main component of both glass and gel layers is silicon dioxide, therefore the considered fireproof systems are characterized by high chemical compatibility and good adhesion of the gel filling to the glass surface. Such a compact, uniform structure of the above-mentioned systems prevents delamination processes occurring as a result of, for example, the incompatibility of two media in direct contact with each other.

In addition to silicon dioxide compounds, the gel contains modifiers that act as e.g. plasticizers, which include polyols in the form of glycerol, sorbitol or xylitol, which not only positively affect the hardening process of the layer, but above all determine the reduction of the freezing point of water in the system, thanks to which the fireproof units do not change their properties under the influence of low temperatures, so they can be applied in places exposed to subzero temperatures. The glass unit with gel filling is transparent in the entire range of UV-VIS-IR. The type of gel used in the glass unit does not require the use of complicated hardening methods, and the maximum temperature in the oven is relatively low and amounts to 70°C.

The subject of the invention is explained in more detail in examples of its implementation and in the schematic drawing showing two glass panes 1 forming one chamber with a matrix 2 placed therein, made of a number of selective fireproof active layers modified with semiconductor nanoparticles with the participation of quantum dots 3 in a vertical section.

### Example 1

The method of obtaining selective fireproof layers modified with semiconductor nanoparticles and filling the chambers of double and multi-pane glass units with them was carried out in six consecutive steps, consisting in:
- in the first step, several previously made typical packages of glass units were completed, including:
   ∘ a glass unit with float glass panes with a glass thickness of 0.5 - 1.8 mm reinforced with the ion exchange method in a chemical bath,
   ∘ a glass unit with float glass panes with a glass thickness of 1.9 - 3.9 mm reinforced by the ion exchange method in a chemical bath and with float glass panes with a thickness of 4 - 8 mm thermally tempered,
   ∘ A glass unit with glass panes, the surfaces of which were covered with a layer of titanium dioxide TiO₂, or a layer of silicon oxide SiO₂, or a layer of zinc oxide ZnO or a layer of hafnium oxide HfO₂, the chambers formed in these typical glass units were cleaned using known methods.
- in the second step, quantum dots (QDS) were dispersed in glycerol, i.e. their structures (elemental groups) II - IV in water, using 400 mg of these dots and 0.02 litres of glycerol to obtain the concentration of these quantum dots in this suspension at the level of 20 mg/ml, which ensured their dispersion in the entire volume of the dispersion medium without the effect of agglomeration and sedimentation. For this dispersion, quantum dots with the chemical composition CdSe/CdS with a spheroidal architecture and the ability to absorb electromagnetic waves in the UV - VIS - IR range and to convert them into 600 nm wavelengths were used.
- in the third step, a matrix for quantum dots (QDS) based on silica was made, ensuring the fire resistance of this system, by homogenizing the mixture in a reactor equipped with a rotating stirrer at a rotational speed of 80 - 150 rpm, introducing into it successively: 32.4% by weight of an aqueous sodium silicate solution, 32.4% by weight of an aqueous potassium silicate solution, which were stirred at a temperature of 20 - 23 °C for 15 minutes, obtaining a homogeneous system, then
- in the fourth step, the following was added dropwise to the thus obtained homogeneous mixture with continuous rotation of the stirrer of this reactor and at the temperature of 35 °C: 0.75% by weight of sorbitol and 0.85% by weight of xylitol (acting as polyols) and 3% by weight of the dispersion of quantum dots in glycerol obtained in the second step, and the whole was mixed for 35 - 45 minutes, obtaining a homogeneous mixture, and then
- in the fifth step, 30.60% by weight of an aqueous solution of colloidal silica was introduced into the reactor with the thus obtained homogeneous mixture, and at a temperature of 40 - 50 °C, the whole was stirred for 40-60 minutes, and then the obtained milky-white mixture was cooled to a temperature of 20-23°C , obtaining a liquid selective fireproof matrix - a liquid composite with a colloidal system called a sol, and then
- in the sixth step, the chambers formed between two glass panes of different thicknesses 0.5 - 1.8 mm, of units appropriately prepared for this purpose, described in the first stage, were filled with the cooled liquid composite by means of a dispenser terminated with a conical needle introducing to their chambers several active layers, one after another (one after the other) of this liquid composite, which depended on the applicable "EI" fire resistance class, and the glass units prepared in this way were heated to the temperature of 60°C and heated at this temperature for 8 hours, achieving the required transparency of the entire system, each of these glass units and then cooled.

### Example 2

The method of obtaining selective fireproof layers modified with semiconductor nanoparticles and filling the chambers of two-component and multi-component packets with them was also carried out in the following stages, consisting in the following:
- in the first step, several previously produced typical packages of glass units mentioned above in the first example were completed, and then
- in the second step, quantum dots (QDS), i.e. their structures (elemental groups) II - IV were dispersed (scattering) in glycerol using 20 ml of glycerol and 800 mg of these quantum dots, obtaining a concentration of these quantum dots in this suspension of 40 mg/ml, then
- in the third stage, to the reactor equipped with a rotary stirrer, following was successively introduced: 57.8% by weight of the aqueous potassium silicate solution and 7.8% by weight of the dispersion of QDS in glycerol obtained in the second step was added dropwise, and the mixture was stirred at the temperature of 40°C for 35 minutes, obtaining a homogeneous system, and then

- in the fourth step, 34.4% by weight of the aqueous solution of colloidal silica were introduced into this reactor with this homogeneous mixture system and the whole was stirred at 40-50°C for 40-60 minutes, and then the resulting milky white mixture was cooled to 20-23°C, obtaining a liquid selective fireproof matrix - a liquid composite with a colloidal system called a sol, and then
- in the fifth step, the chambers formed between each two glass panes with different thicknesses, of glass units appropriately prepared for this purpose described in the first step, were filled with this cooled liquid composite by means of a dispenser terminated with a conical needle, introducing several successive active layers one after another of this composite (sol) into their chambers, which depended on the applicable "EI" resistance class, and then
- in the sixth step, the glass units, the chambers of which were filled with this liquid composite, were exposed to the temperature of 70°C for 6 hours, obtaining the required transparency of the entire system, of each of these glass units, and then were cooled.

### Example 3

The method of obtaining selective fire-resistant layers modified with semiconductor nanoparticles and filling the chambers of double and multi-pane packets with them was also carried out in six successive stages, consisting in:
- in the first step, several previously produced typical packages of glass units mentioned in the first example were completed, and then
- in the second step, the aqueous quantum dots (QDS) dispersion with a concentration of 50 mg/ml was made using 500 mg of these quantum dots and 0.01 1 of water, and then
- in the third step, to the reactor equipped with a rotary stirrer, following was successively introduced: 32.2% by weight of the aqueous solution of sodium silicate and 32.2% by weight of the aqueous solution of potassium silicate, and the whole was mixed at a temperature of 20 - 23°C and for 10-20 minutes until a homogeneous system was obtained, and then
- in the fourth step, to this mixture with continuous rotation of the stirrer of this reactor at the temperature of 35°C the following was added dropwise: 0.75% by weight of sorbitol and 0.85% by weight of xylitol (from the polyol group) and the whole was stirred for 35 - 45 minutes, obtaining a homogeneous mixture, and then
- in the fifth step, to the thus obtained homogeneous mixture in this reactor following were added: 32% by weight of the aqueous solution of colloidal silica and 2% by weight of the aqueous quantum dots (QDS) dispersion obtained in the second step and the whole was subjected to stirring at a temperature of 40-50°C and for 40-60 minutes, resulting in a milky white mixture which was cooled to 20- 23°C, obtaining a liquid selective fireproof matrix - a liquid composite with a colloidal system called sol, and then
- in the sixth step, the chambers formed between each two glass panes of different thicknesses, of glass units appropriately prepared for this purpose, described in the first step, were filled with the thus obtained liquid composite by means of a dispenser terminated with a conical needle introducing several consecutive (one after the another), active layers of this composite, which also depended on the applicable "EI" fire resistance class, and then the glass units, the chambers of which were filled with this liquid composition, were exposed to the temperature of 70°C for 6 hours, achieving the required transparency of the entire system, of each of these glass units.

In other examples of filling glass units with the composite according to the invention, its dosing was carried out using a partially closed glass unit equipped with "super spacer" type distance frames and with a specially made opening allowing the introduction of this liquid composite into the chambers of these glass units, forming an active layer called a matrix, located between two glass panes of the glass unit. In addition, the application of the composite (gel) can also be carried out by pouring it on a cold or warm glass pane, then drying it at a temperature of 40-90°C in order to control the evaporation of excess water. After that, the glass pane prepared in this way is joined with the other glass pane in the process of lamination using film or resin.

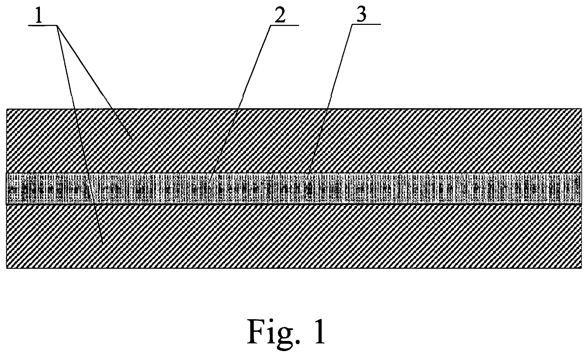

In other embodiments, not shown in the drawing, several individual glass units containing the active layer (matrix) are bonded with each other in a known manner, obtaining at the same time a higher "EI" fire class.

### Example 4

The glass unit consisting of two float glass panes, reinforced by the ion method in a chemical bath, with a thickness of 0.5-1.8 mm, the surfaces of which were covered with a layer of TiO₂, titanium dioxide, forming one chamber, was filled with an active layer, which was a liquid composite - fireproof matrix, containing in its recipe composition:
- 32.4% by weight of the aqueous sodium silicate solution
- 32.4% by weight of the aqueous potassium silicate solution
- 0.75% by weight of sorbitol
- 0.85% by weight of xylitol
- 3.00% of the quantum dot dispersion in glycerol
- 30.6% by weigh of colloidal silica.

### Example 5

The glass unit consisting of two float glass panes, reinforced by the ion method in a chemical bath, with a thickness of 1.9-3.9 mm, whose surfaces were covered with a layer of SiO₂ silicon oxide, forming one chamber, was filled with an active layer, which was a liquid composite - fireproof matrix containing in its recipe composition:
- 57.8% by weight of the aqueous potassium silicate solution
- 7.8% of the quantum dot dispersion in glycerol
- 34.4% by weight of colloidal silica

### Example 6

The glass unit consisting of two float glass panes, reinforced by the ion method in a chemical bath, 4-8 mm thick, the surfaces of which were covered with a layer of ZnO zinc oxide, forming one chamber, was filled with an active layer, which was a composite - fireproof matrix containing in its recipe composition:
- 32.2% by weight of the aqueous sodium silicate solution
- 32.2% by weight of the aqueous potassium silicate solution
- 0.75% by weight of sorbitol
- 0.85% by weight of xylitol
- 2.00% dispersion of quantum dots in water
- 32.00% by weight of colloidal silica

In other embodiments, the insulating glass units had two or more chambers made of float glass of varying thickness and filled with active layers, which was a composite having the formulation described in Examples 4-6.

## Claims

1. A method of obtaining a selective fireproof layer modified with semiconductor nanoparticles and filling with this layer the chamber or chambers of the glass unit having float glass panes with a thickness of 0.5 - 1.8 mm reinforced with the ion method in a chemical bath or a set with float glass panes with a thickness of 1.9 - 3.9 mm, reinforced by the ion exchange method in a chemical bath or a set of glass panes with a thickness of 4 - 8 mm thermally tempered or a set of glass panes with a layer of titanium dioxide (TiO₂) or a layer of silicon dioxide (SiO₂) or a layer of zinc oxide (ZnO) or a layer of hafnium dioxide (HfO₂) **characterized in that** it is carried out in five successive technological steps consisting of:
- in the first step, dispersion of quantum dots (QDS) is performed with the chemical composition CdSe/CdS with spheroidal architecture and the ability to absorb electromagnetic waves in the UV - VIS - IR range and convert them into wavelengths of 600 nm in glycerol, obtaining the concentration of these quantum dots on levels from 20 mg/l to 50 mg/l, then
- in the second step, a matrix for quantum dots (QDS) is prepared by homogenizing a mixture in a reactor equipped with a rotary stirrer by successively introducing into it:
- 32.2 - 32.4% by weight of an aqueous sodium silicate solution, and
- 32.2 - 32.4% by weight of an aqueous potassium silicate solution, which were stirred at a temperature of 20-23°C and for 10-20 minutes, obtaining the homogeneous mixture, and then
- in the third step, the following components are added dropwise to this homogeneous mixture with the continuous rotation of the stirrer of this reactor at the temperature of 35°C:
- 0.75% by weight of sorbitol
- 0.85% by weight of xylitol, and
- 2 % - 3.00% by weight of glycerol dispersion of quantum dots and the whole is stirred in this reactor for 35-45 minutes, also obtaining a homogeneous mixture, and then
- in the fourth step, 30.60% - 32.00% by weight of an aqueous colloidal silica solution are introduced into this reactor with this homogeneous mixture of all components and the whole is stirred at a temperature of 40-50 °C and for 40-60 minutes, and the resulting milky white, homogeneous mixture is cooled down to the temperature of 20 - 23 °C to obtain the liquid selective fireproof matrix modified with semiconductor nanoparticles, and then with the thus obtained matrix
- in the fifth step, the chamber or chambers formed between each two glass panes of the glass unit are filled through the opening previously made in distance frames formed between each two glass panes of the glass unit using a dispenser, and then glass units filled with this fireproof matrix are subjected to a temperature of 60 °C - 70°C for 6 - 8 hours, as a result of which the required transparency and fire resistance of the entire system, of each of these glass units, is obtained, and then the system is cooled.

2. A glass unit with the active layer or layers being the selective fireproof layer modified with semiconductor nanoparticles, having a set of float glass panes 0.5-1.8 mm thick, reinforced by the ion method in a chemical bath or a set of float glass panes of 1.9-3.9 mm thick reinforced by ion exchange in a chemical bath, or a set of glass panes 4-8 mm thick thermally tempered or a set of glass panes covered with a layer of titanium dioxide (TiO₂), or a layer of silicon dioxide (SiO₂), or a layer of zinc oxide (ZnO), or a layer of hafnium dioxide (HfO₂), **characterized in that the** chamber or chambers of this glass unit is (are) filled with the active - selective fireproof layer modified with semiconductor nanoparticles, containing in its recipe composition:
- 32.2 - 32.4% by weight of an aqueous sodium silicate solution
- 32.2 - 32.4% by weight of an aqueous potassium silicate solution
- 0.75% by weight of sorbitol
- 0.85% by weight of xylitol
- 2 % - 3.00% by weight of glycerol dispersion of quantum dots
- 30.60% - 32.00% by weight of colloidal silica,
obtainable by the method of claim 1.

3. A method of obtaining a selective fireproof layer modified with semiconductor nanoparticles and filling with this layer the chamber or chambers of the glass unit having float glass panes with a thickness of 0.5 - 1.8 mm reinforced with the ion method in a chemical bath or a set with float glass panes with a thickness of 1.9 - 3.9 mm, reinforced by the ion exchange method in a chemical bath or a set of glass panes with a thickness of 4 - 8 mm thermally tempered or a set of glass panes with a layer of titanium dioxide (TiO₂) or a layer of silicon dioxide (SiO₂) or a layer of zinc oxide (ZnO) or a layer of hafnium dioxide (HfO₂) **characterized in that** it is carried out in four successive technological steps consisting of:
- in the first step, dispersion of quantum dots (QDS) is performed with the chemical composition CdSe/CdS with spheroidal architecture and the ability to absorb electromagnetic waves in the UV - VIS - IR range and convert them into wavelengths of 600 nm in glycerol, obtaining the concentration of these quantum dots on levels from 20 mg/l to 40 mg/l, then
- in the second step, a matrix for quantum dots (QDS) is prepared by homogenizing a mixture in a reactor equipped with a rotary stirrer, successively introducing into it:
- 57.8% by weight of potassium silicate and 7.8% by weight of dispersion of quantum dots (QDS) in glycerol is added dropwise,
which are stirred together at the temperature of 40 °C and for 35 minutes to obtain the homogeneous mixture, and then
- in the third step, 34.40% by weight of an aqueous solution of colloidal silica are introduced into this reactor with the obtained homogeneous mixture, and the whole is stirred at a temperature of 40-50°C and for 40-60 minutes, resulting in a milky white homogeneous mixture, which is cooled down to a temperature of 20 - 23°C obtaining the liquid selective fireproof matrix modified with semiconductor nanoparticles, and then with the matrix obtained in this way
- in the fourth step, the chamber or chambers formed between each two glass panes of the glass unit are filled through opening made in distance frames placed between each two glass panes of the glass unit, and then the glass units filled with this fireproof matrix are subjected to a temperature of 60°C - 70°C for 6 - 8 hours, as a result of which the required transparency and fire resistance of the entire system, of each of these glass units, is obtained, and then they are cooled.

4. A glass unit with the active layer or layers being the selective fireproof layer modified with semiconductor nanoparticles, having a set of float glass panes 0.5-1.8 mm thick, reinforced by the ion method in a chemical bath or a set of float glass panes of 1.9-3.9 mm thick reinforced by ion exchange in a chemical bath, or a set of glass panes 4-8 mm thick thermally tempered or a set of glass panes covered with a layer of titanium dioxide (TiO₂), or a layer of silicon dioxide (SiO₂), or a layer of zinc oxide (ZnO) or a layer of hafnium dioxide (HfO₂), **characterized in that** the chamber or chambers of this glass unit is (are) filled with the active - selective fireproof layer modified with semiconductor nanoparticles, containing in its recipe composition:
- 57.8% by weight of the aqueous potassium silicate solution
- 7.8% of dispersion of quantum dots in glycerol at a concentration of 40 mg/l
- 34.4% by weight of colloidal silica,
obtainable by the method of claim 3.

## Patentansprüche

1. Ein Verfahren zur Herstellung einer selektiven feuerfesten Schicht, die durch Halbleitemanopartikel modifiziert wurde, und das Füllen der Kammer oder Kammern der Glaseinheit mit dieser Schicht, wobei die Floatglaspscheiben mit einer Dicke von 0,5 - 1,8 mm verstärkt wurden durch das Ionenverfahren in einem chemischen Bad oder einem Satz mit Floatglaspscheiben mit einer Dicke von 1,9 - 3,9 mm verstärkt wurden durch das Ionenaustauschverfahren in einem chemischen Bad oder einem Satz von Glasscheiben mit einer Dicke von 4 - 8 mm thermisch gehärtet wurden oder einem Satz von Glasscheiben mit einer Schicht aus Titandioxid (TiO₂) oder einer Schicht aus Siliziumdioxid (SiO₂) oder einer Schicht aus Zinkoxid (ZnO) oder einer Schicht aus Hafniumdioxid (HfO₂), **dadurch gekennzeichnet, dass** in fünf aufeinanderfolgenden technologischen Schritten durchgeführt wird, die wie folgt aussehen:
- im ersten Schritt wird die Dispersion von Quantenpunkten (QDS) durchgeführt, wobei die chemische Zusammensetzung CdSe/CdS und eine spheroidale Architektur verwendet werden, die in der Lage ist, elektromagnetische Wellen im UV-VIS-IR-Bereich zu absorbieren und in Wellenlängen von 600 nm in Glycerin umzuwandeln. Hierbei wird eine Konzentration von 20 mg/l bis 50 mg/l dieser Quantenpunkte erzielt.
- im zweiten Schritt wird eine Matrix für Quantenpunkte (QDS) hergestellt, indem eine Mischung in einem Reaktor mit einem Rührgerät homogenisiert wird, indem nacheinander Folgendes eingebracht wird:
- 32,2-32,4 Gewichtsprozent von wässriger Natriumsilikatlösung und
- 32,2 - 32,4 Gewichtsprozent einer wässrigen Kaliumsilikatlösung wurden bei einer Temperatur von 20-23°C und für 10-20 Minuten gerührt, um eine homogene Mischung zu erhalten und
- im dritten Schritt werden die folgenden Komponenten tropfenweise zu dieser homogenen Mischung bei kontinuierlicher Rotation des Rührers in diesem Reaktor bei einer Temperatur von 35 °C hinzugefügt:
- 0,75 Gewichtsprozent von Sorbitol
- 0,85 Gewichtsprozent von Xylitol und
- 2 bis 3,00 Gewichtsprozent einer Dispersion von Quantenpunkten, die Glycerol enthalten
und das Ganze wird in diesem Reaktor für 35-45 Minuten gerührt, wobei eine homogene Mischung entsteht und
- im vierten Schritt werden 30,60 - 32,00 Gewichtprozent einer wässrigen kolloidalen Siliziumdioxid-Lösung in diesen Reaktor mit dieser homogenen Mischung aller Komponenten eingebracht und das Ganze bei einer Temperatur von 40-50 °C und für 40-60 Minuten gerührt. Die so entstandene milchig-weiße homogene Mischung wird auf eine Temperatur von 20-23 °C abgekühlt, um eine flüssige, selektive, feuerfeste Matrix zu erhalten, die mit Halbleiternanopartikeln modifiziert ist, und dann mit der so erhaltenen Matrix
- im fünften Schritt werden die Kammer oder Kammern zwischen je zwei Glasscheiben der Glaseinheit durch eine Öffnung in den Abstandshaltern zwischen den beiden Glasscheiben der Glaseinheit mit einem Dispenser gefüllt. Die mit diesem feuerfesten Matrix gefüllten Glaseinheiten werden für 6-8 Stunden einer Temperatur von 60°C - 70°C ausgesetzt, wodurch die erforderliche Transparenz und Feuerbeständigkeit des gesamten Systems und jeder dieser Glaseinheiten erreicht wird. Danach wird das System abgekühlt.

2. Eine Glaseinheit, bei der die aktive Schicht oder Schichten die selektive feuerfeste Schicht ist, die mit Halbleiternanopartikeln modifiziert wurde. Diese Einheit besteht aus einem Satz von Floatglaspscheiben mit einer Dicke von 0,5-1,8 mm, die durch das lonenverfahren in einem chemischen Bad verstärkt wurden, oder aus einem Satz von Floatglasscheiben mit einer Dicke von 1,9-3,9 mm, die durch den Ionenaustausch in einem chemischen Bad verstärkt wurden, oder aus einem Satz von thermisch temperierten Glasscheiben mit einer Dicke von 4-8 mm, oder aus einem Satz von Glasscheiben, die mit einer Schicht aus Titandioxid (TiO₂), oder einer Schicht aus Siliziumdioxid (SiO₂), oder einer Schicht aus Zinkoxid (ZnO) oder einer Schicht aus Hafniumdioxid (HfO₂) bedeckt sind, **dadurch gekennzeichnet, dass** die Kammer oder Kammern dieser Glaseinheit mit der aktiven selektiven feuerfesten Schicht gefüllt sind, die mit Halbleiternanopartikeln modifiziert wurde und folgende Bestandteile enthält:
- 32,2-32,4 Gewichtsprozent einer wässrigen Natriumsilikatlösung
- 32,2 - 32,4 Gewichtsprozent von wässriger Kaliumsilikatlösung
- 0,75 Gewichtsprozent von Sorbitol
- 0,85 Gewichtsprozent von Xylitol
- 2 bis 3,00 Gewichtsprozent einer Dispersion von Quantenpunkten, die Glycerol enthalten
- 30,60 - 32,00 Gewichtsprozent von kolloidalem Siliciumdioxid, erhaltbar durch das Verfahren gemäß Anspruch 1.

3. Ein Verfahren zur Herstellung einer selektiven feuerfesten Schicht, die durch Halbleiternanopartikel modifiziert wurde, und das Füllen der Kammer oder Kammern der Glaseinheit mit dieser Schicht, wobei die Floatglaspscheiben mit einer Dicke von 0,5 - 1,8 mm verstärkt wurden durch das lonenverfahren in einem chemischen Bad oder einem Satz mit Floatglaspscheiben mit einer Dicke von 1,9 - 3,9 mm verstärkt wurden durch das Ionenaustauschverfahren in einem chemischen Bad oder einem Satz von Glasscheiben mit einer Dicke von 4 - 8 mm thermisch gehärtet wurden oder einem Satz von Glasscheiben mit einer Schicht aus Titandioxid (TiO₂) oder einer Schicht aus Siliziumdioxid (SiO₂) oder einer Schicht aus Zinkoxid (ZnO) oder einer Schicht aus Hafniumdioxid (HfO₂), **dadurch gekennzeichnet, dass** in vier aufeinanderfolgenden technologischen Schritten durchgeführt wird, die wie folgt aussehen:
- im ersten Schritt wird die Dispersion von Quantenpunkten (QDS) durchgeführt, wobei die chemische Zusammensetzung CdSe/CdS und eine spheroidale Architektur verwendet werden, die in der Lage ist, elektromagnetische Wellen im UV-VIS-IR-Bereich zu absorbieren und in Wellenlängen von 600 nm in Glycerin umzuwandeln. Hierbei wird eine Konzentration von 20 mg/l bis 40 mg/l dieser Quantenpunkte erzielt.
- im zweiten Schritt wird eine Matrix für Quantenpunkte (QDS) hergestellt, indem eine Mischung in einem Reaktor mit einem Rührgerät homogenisiert wird, indem nacheinander Folgendes eingebracht wird:
- es wird eine Mischung aus 57,8 Gewichtprozent von Kaliumsilikat und 7,8 Gewichtprozent von Quantenpunktdispersion (QDS) in Glycerin tropfenweise hinzugefügt,
die beiden Komponenten werden bei einer Temperatur von 40 °C für 35 Minuten miteinander vermischt, um eine homogene Mischung zu erhalten und
- im dritten Schritt wird eine wässrige Lösung von kolloidalem Siliziumdioxid mit einem Gewichtsprozent von 34,40 in den Reaktor zusammen mit der erhaltenen homogenen Mischung eingebracht. Das gesamte Gemisch wird bei einer Temperatur von 40-50°C und für 40-60 Minuten gerührt, wodurch eine milchig-weiße homogene Mischung entsteht. Diese wird auf eine Temperatur von 20-23°C abgekühlt, um die flüssige selektive feuerfeste Matrix zu erhalten, die mit Halbleiternanopartikeln modifiziert ist, und dann mit der so erhaltenen Matrix
- im vierten Schritt werden die Kammer oder Kammern, die sich zwischen den jeweils zwei Glasscheiben der Glaseinheit befinden, durch Öffnungen in den Abstandhaltern zwischen den beiden Glasscheiben der Glaseinheit gefüllt. Anschließend werden die Glaseinheiten mit dieser feuerfesten Matrix einer Temperatur von 60°C - 70°C für 6 - 8 Stunden ausgesetzt. Dadurch wird die erforderliche Transparenz und Feuerbeständigkeit des gesamten Systems, einschließlich jeder einzelnen Glaseinheit, erreicht, bevor sie abgekühlt werden.

4. Eine Glaseinheit, bei der die aktive Schicht oder Schichten die selektive feuerfeste Schicht ist, die mit Halbleiternanopartikeln modifiziert wurde. Diese Einheit besteht aus einem Satz von Floatglaspscheiben mit einer Dicke von 0,5-1,8 mm, die durch das Ionenverfahren in einem chemischen Bad verstärkt wurden, oder aus einem Satz von Floatglasscheiben mit einer Dicke von 1,9-3,9 mm, die durch den Ionenaustausch in einem chemischen Bad verstärkt wurden, oder aus einem Satz von thermisch temperierten Glasscheiben mit einer Dicke von 4-8 mm, oder aus einem Satz von Glasscheiben, die mit einer Schicht aus Titandioxid (TiO₂), oder einer Schicht aus Siliziumdioxid (SiO₂), oder einer Schicht aus Zinkoxid (ZnO) oder einer Schicht aus Hafniumdioxid (HfO₂) bedeckt sind, **dadurch gekennzeichnet, dass** die Kammer oder Kammern dieser Glaseinheit mit der aktiven selektiven feuerfesten Schicht gefüllt sind, die mit Halbleiternanopartikeln modifiziert wurde und folgende Bestandteile enthält:
- 57,8 Gewichtsprozent von wässriger Kaliumsilikatlösung
- 7,8 % der Dispersion von Quantenpunkten in Glycerin bei einer Konzentration von 40 mg/l
- 34,4 Gewichtprozent von kolloidalem Siliziumdioxid, erhältlich durch das Verfahren gemäß Anspruch 3.

## Revendications

1. Procédé permettant d'obtenir une couche ignifuge sélective modifiée par des nanoparticules semi-conductrices et de remplir avec cette couche la ou les chambres de l'unité de verre ayant des vitres en verre flotté d'une épaisseur de 0,5 à 1,8 mm renforcées par la méthode ionique dans un bain chimique ou un ensemble de vitres en verre flotté d'une épaisseur de 1,9 à 3,9 mm, renforcé par la méthode d'échange d'ions dans un bain chimique ou un ensemble de vitres d'une épaisseur de 4 - 8 mm trempées thermiquement ou un ensemble de vitres avec une couche de dioxyde de titane (TiO2 ) ou une couche de dioxyde de silicium (SiO2 ) ou une couche d'oxyde de zinc (ZnO) ou une couche de dioxyde de hafnium (HfO2 ) **caractérisé par le fait qu'**il est réalisé en cinq étapes technologiques successives consistant en :
- dans un premier temps, on procède à la dispersion de points quantiques (QDS) de composition chimique CdSe/CdS à architecture sphéroïdale et ayant la capacité d'absorber les ondes électromagnétiques dans le domaine UV - VIS - IR et de les convertir en longueurs d'onde de 600 nm dans du glycérol, en obtenant la concentration de ces points quantiques à des niveaux allant de 20 mg/l à 50 mg/l, puis
- dans un deuxième temps, une matrice pour points quantiques (QDS) est préparée en homogénéisant un mélange dans un réacteur équipé d'un agitateur rotatif en l'introduisant successivement :
- 32,2 - 32,4 % en poids d'une solution aqueuse de silicate de sodium, et
- 32,2 - 32,4 % en poids d'une solution aqueuse de silicate de potassium, qui ont été agités à une température de 20-23°C et pendant 10-20 minutes, pour obtenir un mélange homogène, puis
- dans la troisième étape, les composants suivants sont ajoutés goutte à goutte à ce mélange homogène avec la rotation continue de l'agitateur de ce réacteur à la température de 35 °C :
- 0,75 % en poids de sorbitol
- 0,85 % en poids de xylitol, et
- 2 % - 3,00 % en poids de dispersion glycérique de points quantiques
et le tout est agité dans ce réacteur pendant 35 à 45 minutes, ce qui permet également d'obtenir un mélange homogène, puis
- dans la quatrième étape, 30,60% - 32,00% en poids d'une solution aqueuse de silice colloïdale sont introduits dans ce réacteur avec ce mélange homogène de tous les composants et le tout est agité à une température de 40-50 °C et pendant 40-60 minutes, et le mélange homogène blanc laiteux résultant est refroidi à une température de 20 - 23 °C pour obtenir la matrice ignifuge sélective liquide modifiée avec des nanoparticules semi-conductrices, et ensuite avec la matrice ainsi obtenue
- dans la cinquième étape, la ou les chambres formées entre chaque deux vitres de l'unité de verre sont remplies par l'ouverture précédemment pratiquée dans les cadres de distance formés entre chaque deux vitres de l'unité de verre à l'aide d'un distributeur, puis les unités de verre remplies de cette matrice ignifuge sont soumises à une température de 60 °C - 70 °C pendant 6 à 8 heures, ce qui permet d'obtenir la transparence et la résistance au feu requises pour l'ensemble du système, de chacune de ces unités de verre, et le système est ensuite refroidi.

2. Une unité de verre dont la ou les couches actives sont la couche ignifuge sélective modifiée par des nanoparticules semi-conductrices, comportant un ensemble de vitres en verre flotté d'une épaisseur de 0,5-1,8 mm, renforcées par la méthode ionique dans un bain chimique, ou un ensemble de vitres en verre flotté d'une épaisseur de 1,9-3,9 mm d'épaisseur, renforcées par échange d'ions dans un bain chimique, ou un ensemble de vitres de 4 à 8 mm d'épaisseur trempées thermiquement, ou un ensemble de vitres recouvertes d'une couche de dioxyde de titane (TiO2 ), ou d'une couche de dioxyde de silicium (SiO2 ), ou d'une couche d'oxyde de zinc (ZnO), ou d'une couche de dioxyde de hafnium (HfO2 ), **caractérisé par le fait que** la ou les chambres de cette unité de verre sont remplies de la couche ignifuge active et sélective modifiée par des nanoparticules semi-conductrices, contenant dans sa composition de recette :
- 32,2 - 32,4 % en poids d'une solution aqueuse de silicate de sodium
- 32,2 - 32,4 % en poids d'une solution aqueuse de silicate de potassium
- 0,75 % en poids de sorbitol
- 0,85% en poids de xylitol
- 2 % - 3,00 % en poids de dispersion glycérique de points quantiques
- 30,60% - 32,00% en poids de silice colloïdale, obtenue par la méthode de la revendication 1.

3. Procédé permettant d'obtenir une couche ignifuge sélective modifiée par des nanoparticules semi-conductrices et de remplir avec cette couche la ou les chambres de l'unité de verre ayant des vitres en verre flotté d'une épaisseur de 0,5 à 1,8 mm renforcées par la méthode ionique dans un bain chimique ou un ensemble de vitres en verre flotté d'une épaisseur de 1,9 à 3,9 mm, renforcé par la méthode d'échange d'ions dans un bain chimique ou un ensemble de vitres d'une épaisseur de 4 - 8 mm trempées thermiquement ou un ensemble de vitres avec une couche de dioxyde de titane (TiO2 ) ou une couche de dioxyde de silicium (SiO2 ) ou une couche d'oxyde de zinc (ZnO) ou une couche de dioxyde de hafnium (HfO2 ) **caractérisé par le fait qu'**il est réalisé en quatre étapes technologiques successives consistant en :
- dans un premier temps, on procède à la dispersion de points quantiques (QDS) de composition chimique CdSe/CdS à architecture sphéroïdale et ayant la capacité d'absorber les ondes électromagnétiques dans le domaine UV - VIS - IR et de les convertir en longueurs d'onde de 600 nm dans du glycérol, en obtenant la concentration de ces points quantiques à des niveaux allant de 20 mg/l à 40 mg/l, puis
- dans un deuxième temps, une matrice pour points quantiques (QDS) est préparée en homogénéisant un mélange dans un réacteur équipé d'un agitateur rotatif en y introduisant successivement :
- 57,8 % en poids de silicate de potassium et 7,8 % en poids de dispersion de points quantiques (QDS) dans du glycérol sont ajoutés goutte à goutte,
que l'on agite ensemble à une température de 40 °C et pendant 35 minutes pour obtenir le mélange homogène, puis
- dans une troisième étape, 34,40% en poids d'une solution aqueuse de silice colloïdale sont introduits dans ce réacteur avec le mélange homogène obtenu, et l'ensemble est agité à une température de 40-50°C et pendant 40-60 minutes, ce qui permet d'obtenir un mélange homogène blanc laiteux, qui est refroidi à une température de 20-23°C pour obtenir la matrice ignifuge sélective liquide modifiée avec des nanoparticules semi-conductrices, puis avec la matrice obtenue de cette manière.
- dans la quatrième étape, la ou les chambres formées entre les deux vitres de l'unité de verre sont remplies par des ouvertures pratiquées dans les cadres de distance placés entre les deux vitres de l'unité de verre, puis les unités de verre remplies de cette matrice ignifuge sont soumises à une température de 60°C - 70°C pendant 6 à 8 heures, ce qui permet d'obtenir la transparence et la résistance au feu requises pour l'ensemble du système, pour chacune de ces unités de verre, et elles sont ensuite refroidies.

4. Une unité de verre dont la ou les couches actives sont la couche ignifuge sélective modifiée par des nanoparticules semi-conductrices, comportant un ensemble de vitres en verre flotté de 0,5-1,8 mm d'épaisseur, renforcées par la méthode ionique dans un bain chimique, ou un ensemble de vitres en verre flotté de 1,9-3,9 mm d'épaisseur, renforcées par échange ionique dans un bain chimique, ou un ensemble de vitres de 4 à 8 mm d'épaisseur trempées thermiquement, ou un ensemble de vitres recouvertes d'une couche de dioxyde de titane (TiO2 ), ou d'une couche de dioxyde de silicium (SiO2 ), ou d'une couche d'oxyde de zinc (ZnO) ou d'une couche de dioxyde de hafnium (HfO2 ), **caractérisé par le fait que** la ou les chambres de cette unité de verre sont remplies de la couche ignifuge active et sélective modifiée par des nanoparticules semi-conductrices, contenant dans sa composition de recette :
- 57,8 % en poids de la solution aqueuse de silicate de potassium
- 7,8 % de dispersion de points quantiques dans du glycérol à une concentration de 40 mg/l
- 34,4 % en poids de silice colloïdale, obtenue par la méthode de la revendication 3.
